# EUROPEAN PATENT APPLICATION

(11) **EP 4 686 641 A1**
(43) Date of publication of application: **04.02.2026**
(21) Application number: 25191545.0
(22) Date of filing: 24.07.2025
(51) Int. Cl.: B62D 25/02, B62D 25/08, B62D 25/20

(54) **REINFORCEMENT STRUCTURE OF A MOTOR VEHICLE REAR SIDE PANEL AND VEHICLE**

(30) Priority: 01.08.2024 BR 102024015819
(71) Applicant: Stellantis Automoveis Brasil Ltda, 32669-900 Betim, MG (BR)
(72) Inventor: SANTA ROSA VELOSO, Kelmer, 32669-900 BETIM, MG (BR); VIEIRA AQUINO CASSIMIRO, Isabella Luisa, 32669-900 BETIM, MG (BR); MIRANDA MATTIA, Bruno, 32669-900 BETIM, MG (BR); BASSETTI CAVALCANTE, Andre Luiz, 32669-900 BETIM, MG (BR); GUIMARÃES DE FREITAS, Patricia, 32669-900 BETIM, MG (BR); GUIMARÃES DE FREITAS, Flavio, 32669-900 BETIM, MG (BR); GONÇALVES DOS SANTOS, Leonardo, 32669-900 BETIM, MG (BR)
(74) Representative: Studio Torta S.p.A.

(57) **Abstract**

In a first embodiment, the present invention discloses a reinforcement structure for the rear side panel of a motor vehicle comprising a rib directly shaped in the lower edge portion of the rear side panel, both left and right, in order to act as a support and retention region for the edges of the usual finishing carpeted floor of a vehicle's trunk.

## Description

### FIELD OF THE INVENTION

The present invention is related to the technical field of devices arrangements for fixing linings or interior moldings in motor vehicles. It is also related to functional improvements in production processes, cost reduction, reduction of the final weight of the vehicle and perception of quality by the consumer public. It acts directly on the internal faces of the vehicle rear side panels, next to the support points of the carpeted floor of the vehicle's trunk.

### BACKGROUND OF THE INVENTION

The installation of the carpeted floor inside motor vehicles trunk has been the subject of development of various functional solutions over the years. The current state of the art contemplates from thickening the rear side panels to the incorporation of plastic or metal supports. Any of these solutions presents a series of drawbacks because, for example, with the thickening of the rear side panels, the weight of the vehicle increases and the production cost also increases. In addition, these solutions prevent agile production solutions throughout the vehicle's production perimeter, from the design of the body to the assembly of subassemblies, such as the engine, chassis and other elements.

Therefore, the supporting means of the carpeted floor found in the interior of motor vehicles described in the prior art show different technical solutions that make it impossible to use advanced production processes, cause an increase in the final weight of the vehicle, increase the manufacturing cost and also result in a customer experience that gives the impression of a fragile assembly.

Searching the prior art for patent literature, the following documents were found:

Document FR3094308B1 basically discloses a means for retaining a finishing carpeted floor of a motor vehicle trunk, said retaining means fixed to projections of each side part of the trunk. Each retaining element incorporates a transverse rib in contact with each projection of each side part of the trunk.

Document WO2023143050A1 basically discloses a transverse dividing plate provided between the side panels of a motor vehicle trunk, creating separate storage spaces. Said dividing plate incorporates adjustment means such as corresponding slides and sliding grooves, as well as reinforcing ribs.

Therefore, considering the state-of-the-art solutions, it is clear that none of them were able to solve the technical problems associated with advances in production processes, such as the addition of auxiliary elements and possible thickening of metal parts, with their negative results, i.e., increased cost, increased vehicle weight, low productivity and finishing with a fragile appearance.

In view of the points mentioned, the importance and urgency of a technical solution capable of overcoming the gap currently existing in this technical field is clear. Taking these points into account, the present invention aims to offer a favorable solution to the problems previously presented.

### OBJECTS OF THE INVENTION

The present invention, in a first object, aims to provide a reinforcement structure for a motor vehicle rear side panel.

Another object of the invention is to allow the reinforcement structure of the rear side panel to act as a means of supporting and retaining the finishing carpeted floor of the vehicle's trunk.

Another object of the present invention is to provide a solution to the state of the art problems related to the means of supporting and retaining the finishing carpeted floor of the vehicle's trunk.

Another object of the present invention is to provide a reinforcement structure of the rear side panel capable of being obtained in the production process of a motor vehicle.

Another object of the present invention is to have a vehicle that incorporates the improved reinforcement structure of the rear side panel.

### Summary Description of the Invention

Therefore, the present invention solves such problems of the prior art by means of a reinforcement structure for a vehicle rear side panel comprising a rib directly shaped in the lower edge portion of the internal face of the rear side panel, so as to act as a support and retention region for the edges of the usual finishing carpeted floor of the vehicle's trunk.

The reinforcement structure is shaped in the motor vehicle rear side panel and does not require auxiliary support means made of plastic or metal.

The reinforcement structure designed in the vehicle rear side panel is shaped in both panels, that is, the left side panel and the right side panel, in symmetry.

The reinforcement structure designed in the vehicle rear side panel does not require an increase in the density of the component.

The present invention also relates to a vehicle comprising the reinforcement structure as provided in the present invention.

All the technical characteristics of the present patent application will be immediately recognized and valued by those skilled technicians in the art. These characteristics will be provided in more detail below.

### BRIEF DESCRIPTION OF THE FIGURES

The present invention will be described in more detail with the support of the attached figures, which show a preferred embodiment of the invention. The figures show:

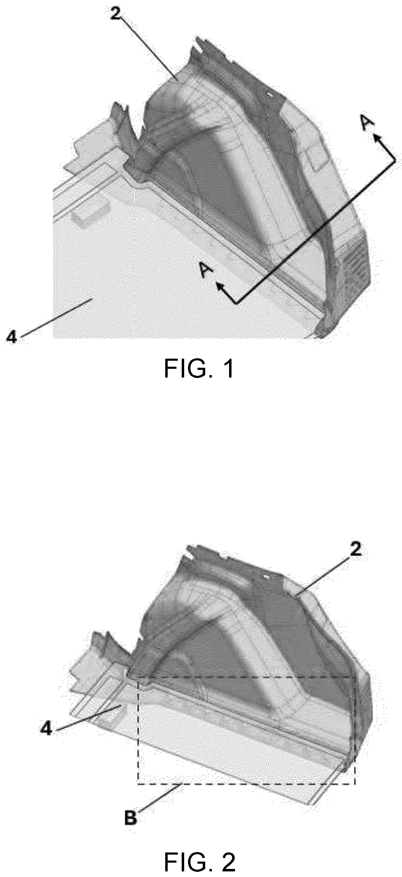

- Figure 1 shows a perspective view of a rear side panel incorporating the proposed reinforcement structure, provided with a cutting line A-A.
- Figure 2 is similar to Figure 1, provided with lines delimiting a Detail B.

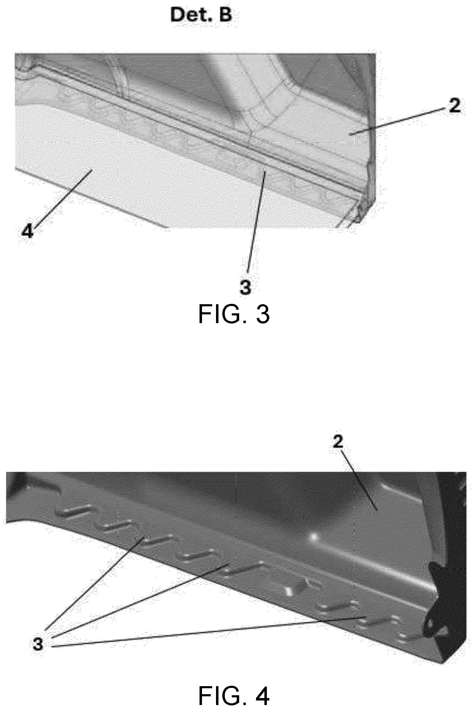

- Figure 3 is Detail B of Figure 2, enlarged.
- Figure 4 shows Detail B enlarged, without the finishing carpeted floor.

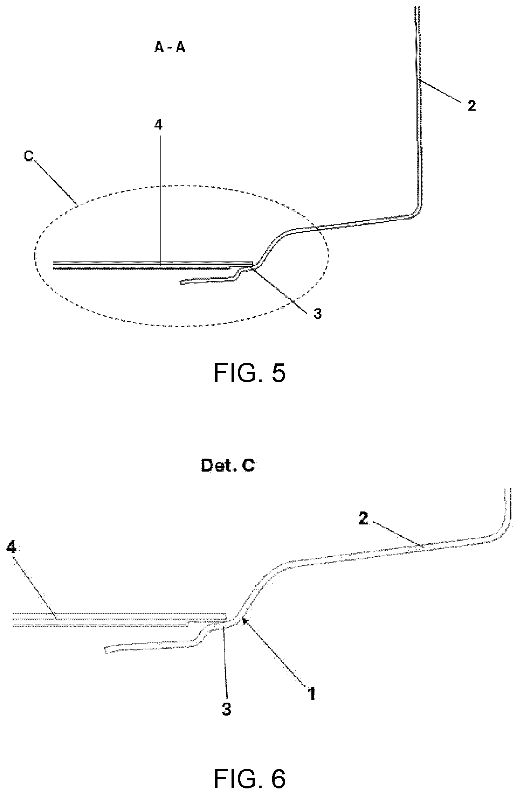

- Figure 5 shows section A-A of Figure 1, with lines delimiting a Detail C.
- Figure 6 shows Detail C of Figure 5, enlarged.

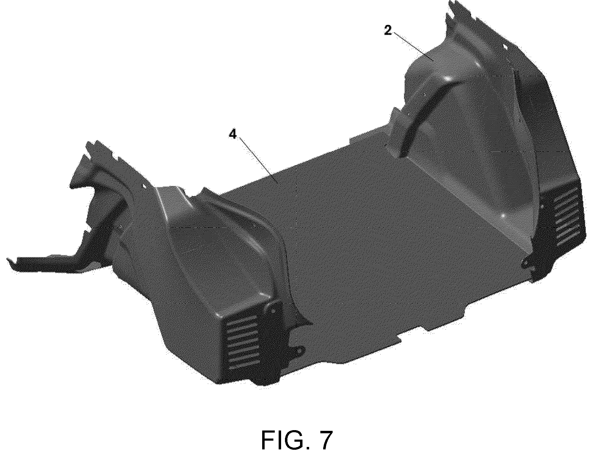

- Figure 7 shows a perspective view of a rear side panel incorporating the proposed reinforcement structure with the finishing carpeted floor in its allocation region.

The reference elements shown in the figures are: reinforcement structure 1; rear side panel 2; rib 3; finishing carpeted floor 4.

### DETAILED DESCRIPTION OF THE INVENTION

Before the invention is described in detail, it should be understood that it is not limited to the specific component parts of those herein described, since such components may vary. It should also be understood that the terminology used herein is for the purpose of describing particular embodiments only and is not intended to be limiting. It should be noted that, as used in the specification and appended claims, the singular forms "a", "an", "the" and "the" include singular and/or plural references, unless the context clearly indicates otherwise. Furthermore, it should be understood that, where parameter ranges delimited by numerical values are provided, the ranges are deemed to include such limiting values.

It should further be understood that the embodiments disclosed herein are not to be construed as individual embodiments that would not be related to each other. The features discussed with one embodiment are to be disclosed also in connection with other embodiments shown herein. If, in one case, a specific feature is not disclosed with one embodiment but with another, the skilled technician would understand that this does not necessarily mean that the feature is not intended to be disclosed with the other embodiment. The skilled technician would understand that the essence of this application is to disclose the feature also for the other embodiment, but only for the sake of clarity and to keep the present specification to a manageable volume, this has not been done.

Furthermore, in the context of the present invention "reinforcement structure" includes any rigid structure capable of supporting and/or retaining a typical finishing carpeted floor for a vehicle's trunk. "Finishing Carpet floor" is any rigid/semi-rigid plate, whole or segmented, provided with an apparent surface in material similar to that of a carpet and which is located inside the trunk of a vehicle. "Rear side panel" is the metal panel located on the rear sides of the body of a vehicle, and the expression here generically identifies the left or right panel, which are symmetrically designed and installed. "Vehicle" is any automotive vehicle that uses a construction plan in its manufacturing process. "BIW (Body In White)" is a term widely used in the automotive industry to designate the body of the vehicle itself. Furthermore, all the concepts and elements presented herein are easily understood by skilled technicians in the subject, and are not limited to the nomenclature used herein.

The present invention discloses a reinforcement structure 1 of a rear side panel 2 of a vehicle comprising a rib 3 directly shaped in the lower edge portion of the rear side panel 2, so as to act as a support and retention region for the edges of the usual finishing carpeted floor 4 of the vehicle's trunk.

The reinforcement structure 1 is shaped in the rear side panel 2 itself and does not require auxiliary support means made of plastic or metal for the finishing carpeted floor 4.

The reinforcement structure 1 designed in the rear side panel 2 itself allows for the planning of the bodywork.

The reinforcement structure 1 is designed in the rear side panel 2 itself and is shaped in both panels, that is, the left side panel and the right side panel, in symmetry.

The reinforcement structure 1, designed in the rear side panel 2 itself, does not require an increase in the density of the component.

The present invention also relates to a vehicle comprising the reinforcement structure 1 as defined by the present invention.

The present invention differs from the state of the art since it overcomes the need for auxiliary means made of plastic or metal to support the finishing carpeted floor 4, since the rib 3 is designed in the rear side panel 2 itself. This configuration also offers other advantages such as: improved rigidity with low-weight material, favoring a lower final weight than that in which the practices of the current state of the art are adopted for the support/retention of the finishing carpeted floor 4; it allows the forming of the part; it avoids the eventual increase in thickness of the rear side panel 2 and improves the user experience with the sensation of a robust trunk area.

Based on the main embodiment mode, disclosed herein and described in detail, and the non-exhaustive examples of alternative embodiments described, several changes, additions and even additional forms of alternative embodiments can be made without departing from the scope or the entirety of the subject matter disclosed in the present invention.

All technical features of the different embodiment modes disclosed in the present patent application will be immediately recognized and valued by those skilled technicians in the art.

It is expressly provided that all combinations of elements that perform the same function in substantially the same way to achieve the same results as the elements claimed herein are within the scope of the present invention. Finally, it should be noted that the scope of protection of the present invention encompasses other possible variations, and is not limited solely by the content of the claims, including possible equivalents.

It should be noted that the drawings attached are not necessarily to scale, and are merely conceptual in nature. However, it is expressly provided that all combinations of elements that perform the same function in substantially the same way to achieve the same results as the elements claimed herein are within the scope of the present invention. Finally, it should be noted that the scope of protection of the present invention encompasses other possible variations, and is not limited solely by the content of the claims alone, including possible equivalents.

## Claims

1. Reinforcement structure (1) of a motor vehicle rear side panel (2), wherein is designed a rib (3) directly shaped in the lower edge portion of the rear side panel (2), so as to act as a support and retention region for the edges of the usual finishing carpeted floor (4) of a vehicle's trunk.

2. Reinforcement structure (1) of a motor vehicle rear side panel (2), according to claim 1, wherein the reinforcement structure (1) is shaped in the rear side panel (2) of the vehicle itself.

3. Reinforcement structure (1) of a motor vehicle rear side panel (2), according to claim 1, wherein said structure (1) is shaped in both the right rear side panel (2) and the left rear side panel (2), in symmetry.

4. Vehicle, wherein it comprises the reinforcement structure (1), as defined by claim 1.
